# EUROPEAN PATENT APPLICATION

(11) **EP 4 506 423 A1**
(43) Date of publication of application: **12.02.2025**
(21) Application number: 23784719.9
(22) Date of filing: 31.03.2023
(51) Int. Cl.: C09D 11/101, C09D 11/38, C09D 11/40, B41M 5/00, B41J 2/01

(54) **INK SET, IMAGE-RECORDING METHOD, AND OBJECT WITH RECORDED IMAGE**

(30) Priority: 08.04.2022 JP 2022064745
(71) Applicant: FUJIFILM Corporation, Tokyo 106-8620 (JP)
(72) Inventor: HARA, Minako, Ashigarakami-gun, Kanagawa 258-8577 (JP)
(74) Representative: Klunker IP Patentanwälte PartG mbB
(86) International application number: PCT/JP2023/013728
(87) International publication number: WO 2023/195433

(57) **Abstract**

There is provided an ink set and an application thereof, the ink set including a first ink that is an active energy ray curable-type inkjet ink containing a polymerizable compound, and a second ink that is an active energy ray curable-type inkjet ink containing metal particles that contain indium, and a polymerizable compound, in which a surface tension of the first ink is 30 mN/m or more.

## Description

### BACKGROUND OF THE INVENTION

### 1. Field of the Invention

The present disclosure relates to an ink set, an image recording method, and an image recorded material.

### 2. Description of the Related Art

In recent years, studies have been conducted on a method of recording an image using an active energy ray curable-type ink containing a polymerizable compound.

For example, JP2013-230637A discloses a manufacturing method of a recorded material, the manufacturing method including a first ink applying step of applying a first ink containing a first polymerizable compound, which is polymerized by irradiation with ultraviolet rays, onto a surface of a substrate composed of a material in which at least the surface is non-liquid absorbent, using an inkjet method, a first curing step of polymerizing and curing the first polymerizable compound, a second ink applying step of applying a second ink containing a second polymerizable compound, which is polymerized by irradiation with ultraviolet rays, and a metal powder, onto a cured product of the first polymerizable compound, using the inkjet method, and a second curing step of polymerizing and curing the second polymerizable compound.

### SUMMARY OF THE INVENTION

However, in a case where high-speed printing is performed by using an active energy ray curable-type ink containing a polymerizable compound, there may be a demand for obtaining an image with a visually massive feeling.

The present disclosure has been made in view of such circumstances, and according to one embodiment of the present invention, an ink set and an image recording method capable of recording an image with a visually massive feeling even in a case where high-speed printing is performed are provided.

In addition, according to another embodiment of the present invention, an image recorded material, on which an image with a visually massive feeling is recorded, is provided.

The present disclosure includes the following aspects.
<1> An ink set comprising: a first ink that is an active energy ray curable-type inkjet ink containing a polymerizable compound; and a second ink that is an active energy ray curable-type inkjet ink containing metal particles that contain indium, and a polymerizable compound, in which a surface tension of the first ink is 30 mN/m or more.
<2> The ink set according to <1>, in which the polymerizable compound contained in the first ink includes a polymerizable compound having an amide structure.
<3> The ink set according to <2>, in which a content of the polymerizable compound having the amide structure is 5% by mass to 50% by mass with respect to a total amount of the first ink.
<4> The ink set according to any one of <1> to <3>, in which the polymerizable compound contained in the first ink includes a polyfunctional polymerizable compound.
<5> The ink set according to <4>, in which a proportion of the polyfunctional polymerizable compound that accounts for the polymerizable compound is 1% by mass to 50% by mass.
<6> The ink set according to any one of <1> to <5>, in which the polymerizable compound contained in the first ink includes a monofunctional polymerizable compound including at least one structure selected from the group consisting of a cyclic ether structure and an alicyclic structure.
<7> The ink set according to any one of <1> to <6>, in which the polymerizable compound contained in the first ink includes a polymerizable compound having an amide structure and a monofunctional polymerizable compound including at least one structure selected from the group consisting of a cyclic ether structure and an alicyclic structure.
<8> An image recording method in which the ink set according to any one of <1> to <7> is used, the method comprising: a step of applying the first ink onto a substrate using an inkjet recording method; a step of forming a first ink film by irradiating the first ink applied onto the substrate with an active energy ray A; a step of applying the second ink onto the first ink film using an inkjet recording method; and a step of recording an image by irradiating the second ink applied onto the first ink film with an active energy ray B.
<9> The image recording method according to <8>, in which the step of recording the image includes a step of temporarily curing the second ink by irradiation with an active energy ray B 1 having an irradiation energy lower than an irradiation energy of the active energy ray B, and a step of irradiating an ink film formed by the temporary curing of the second ink with the active energy ray B.
<10> An image recorded material comprising: a substrate; and an image disposed on the substrate, in which the image includes a first ink layer formed on a surface of the substrate and a second ink layer formed on a surface of the first ink layer, and metal particles containing indium are present only in a region up to 70% of a thickness of the second ink layer from a surface of the second ink layer toward an inside of the second ink layer.

According to one embodiment of the present invention, an ink set and an image recording method capable of recording an image with a visually massive feeling even in a case where high-speed printing is performed are provided.

According to another embodiment of the present invention, an image recorded material in which an image with a visually massive feeling is recorded is provided.

### DESCRIPTION OF THE PREFERRED EMBODIMENTS

Hereinafter, an ink set, an image recording method, and an image recorded material according to the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit or a lower limit described in a certain numerical range may be replaced with an upper limit or a lower limit in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes general films, and the term "image recording" denotes formation of the image (that is, the film). In addition, the concept of "image" in the present specification also includes a solid image.

In the present specification, "(meth)acrylate" is a concept including both acrylate and methacrylate, "(meth)acryloyl group" is a concept including both acryloyl group and methacryloyl group, and "(meth)acrylic acid" has a concept including both acrylic acid and methacrylic acid.

### [Ink set]

An ink set of the present disclosure comprises a first ink containing a polymerizable compound and a second ink containing metal particles that contain indium, and the polymerizable compound, in which a surface tension of the first ink is 30 mN/m or more.

With the ink set according to the present disclosure, an image with a visually massive feeling can be obtained even in a case where high-speed printing is performed.

Hereinafter, each component contained in the first ink and the second ink in the ink set according to one embodiment of the present disclosure will be described.

The ink set according to the embodiment of the present disclosure comprises a first ink, which is an active energy ray curable-type inkjet ink, and a second ink, which is an active energy ray curable-type inkjet ink. That is, each of the first ink and the second ink is cured by irradiation with active energy rays. Examples of the active energy ray include γ-rays, β-rays, electron beams, ultraviolet rays, and visible rays. Among these, ultraviolet rays are preferable as the active energy ray. It is preferable that each of the first ink and the second ink is an ultraviolet curable-type ink.

Each of the first ink and the second ink is an inkjet ink. That is, each of the first ink and the second ink is an ink used for jetting with an inkjet recording method.

### <First ink>

### (Polymerizable compound)

The first ink contained in the ink set according to the present disclosure contains at least one polymerizable compound.

The polymerizable compound is a compound having a polymerizable group. As the polymerizable group, a radically polymerizable group or a cationically polymerizable group is preferable, and a radically polymerizable group is more preferable.

The polymerizable compound may have only one polymerizable group or two or more polymerizable groups.

As the polymerizable compound, a radically polymerizable compound is preferable.

The radically polymerizable group is preferably an ethylenically unsaturated group, more preferably at least one selected from the group consisting of a (meth)acryloyl group, an allyl group, a styryl group, and a vinyl group, and still more preferably a (meth)acryloyl group.

Examples of the cationically polymerizable group include an epoxy group and an oxetanyl group.

The polymerizable compound may be a polymerizable monomer, a polymerizable polymer, or a combination of a polymerizable monomer and a polymerizable polymer.

Here, the polymerizable monomer means a polymerizable compound having a molecular weight of less than 1,000, and the polymerizable polymer means a polymerizable compound having a weight-average molecular weight (Mw) of 1,000 or more. The concept of "polymerizable polymer" in the present disclosure also includes so-called oligomers.

The weight-average molecular weight (Mw) of the polymerizable compound is preferably 30,000 or less, more preferably 20,000 or less, and still more preferably 10,000 or less.

Examples of the lower limit of Mw of the polymerizable compound include 50, 60, and 70.

In the present disclosure, the weight-average molecular weight (Mw) means a value measured by gel permeation chromatography (GPC).

In the measurement by GPC, HLC (registered trademark)-8020GPC (Tosoh Corporation) is used as a measuring device, three columns of TSKgel (registered trademark) Super Multipore HZ-H (4.6 mmID × 15 cm, Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 µL, and a measurement temperature of 40°C are set, and a RI detector is used.

Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The polymerizable compound may be a monofunctional polymerizable compound or a polyfunctional polymerizable compound.

Here, the monofunctional polymerizable compound means a compound including only one polymerizable group in one molecule, and the polyfunctional polymerizable compound means a compound including two or more polymerizable groups in one molecule.

Examples of the monofunctional polymerizable compound include monofunctional (meth)acrylate, monofunctional (meth)acrylamide, a monofunctional aromatic vinyl compound, monofunctional vinyl ether, and a monofunctional N-vinyl compound.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, and isobornyl (meth)acrylate,2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, ethylcarbitol (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3 -hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, cyclic trimethylolpropane formal (meth)acrylate, phenylglycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate,2-methacryloyloxyethyl succinate, 2-methacryloyloxyhexahydrophthalic acid, 2-methacryloyloxyethyl-2-hydroxypropyl phthalate, butoxydiethylene glycol (meth)acrylate, 2-hydroxy-3-phenoxypropyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified-2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, and 3-(meth)acryloyl-2-oxazolidinone.

Examples of the monofunctional (meth)acrylamide include (meth)acrylamide, N-methyl(meth)acrylamide, N-ethyl(meth)acrylamide, N-propyl(meth)acrylamide, N-isopropyl(meth)acrylamide, N-n-butyl(meth)acrylamide, N-t-butyl(meth)acrylamide, N-butoxymethyl(meth)acrylamide, N-isobutoxymethyl(meth)acrylamide, N-methylol(meth)acrylamide, N-phenyl(meth)acrylamide, N-benzyl(meth)acrylamide, N,N-dimethyl(meth)acrylamide, N,N-diethyl(meth)acrylamide, hydroxyethyl(meth)acrylamide, hydroxymethyl(meth)acrylamide, and (meth)acryloylmorpholine.

Examples of the monofunctional aromatic vinyl compound include styrene, dimethylstyrene, trimethylstyrene, isopropylstyrene, chloromethylstyrene, methoxystyrene, acetoxystyrene, chlorostyrene, dichlorostyrene, bromostyrene, vinyl benzoic acid methyl ester, 3-methylstyrene, 4-methylstyrene, 3-ethylstyrene, 4-ethylstyrene, 3-propyl styrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allyl styrene, isopropenyl styrene, butenyl styrene, octenyl styrene, 4-t-butoxycarbonyl styrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, and ethoxyethyl vinyl ether,butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinylcaprolactam and N-vinylpyrrolidone.

The polyfunctional polymerizable compound is a bi- or higher functional polymerizable compound.

Examples of a bifunctional polymerizable compound include bifunctional (meth)acrylate, bifunctional vinyl ether, bifunctional (meth)acrylamide, and a bifunctional polymerizable compound including a vinyl ether group and a (meth)acryloyl group.

Examples of the bifunctional (meth)acrylate include ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate,EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, and tricyclodecanedimethanol di(meth)acrylate.

Examples of the bifunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, and bisphenol F alkylene oxide divinyl ether.

Examples of the bifunctional (meth)acrylamide include N,N'-methylenebis(meth)acrylamide and N,N'-ethylenebis(meth)acrylamide.

Examples of the bifunctional polymerizable compound including a vinyl ether group and a (meth)acryloyl group include 2-(2-vinyloxyethoxy)ethyl (meth)acrylate.

Examples of the tri- or higher functional polymerizable compound include tri- or higher functional (meth)acrylate and tri- or higher functional vinyl ether.

Examples of the tri- or higher functional (meth)acrylate include trimethylolethane tri(meth)acrylate, trimethylolpropane tri(meth)acrylate, EO-modified trimethylolpropane tri(meth)acrylate, PO-modified trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, and tris(2-acryloyloxyethyl) isocyanurate.

Examples of the tri- or higher functional vinyl ether include trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-modified trimethylolpropane trivinyl ether, PO-modified trimethylolpropane trivinyl ether, EO-modified ditrimethylolpropane tetravinyl ether, PO-modified ditrimethylolpropane tetravinyl ether, EO-modified pentaerythritol tetravinyl ether, PO-modified pentaerythritol tetravinyl ether, EO-modified dipentaerythritol hexavinyl ether, and PO-modified dipentaerythritol hexavinyl ether.

Examples of the polyfunctional polymerizable compound also include urethane (meth)acrylate.

The urethane (meth)acrylate is preferably a compound including two or three (meth)acryloyl groups and at least one urethane bond.

Examples of the urethane (meth)acrylate include urethane (meth)acrylate which is a reaction product of a bifunctional isocyanate compound and a hydroxyl group-containing (meth)acrylate (with another active hydrogen group-containing compound as necessary).

Examples of the bifunctional isocyanate compound include aliphatic diisocyanates such as methylene diisocyanate, dimethylene diisocyanate, trimethylene diisocyanate, tetramethylene diisocyanate, pentamethylene diisocyanate, hexamethylene diisocyanate, dipropyl ether diisocyanate, 2,2-dimethylpentane diisocyanate, 3-methoxyhexane diisocyanate, octamethylene diisocyanate, 2,2,4-trimethylpentane diisocyanate, nonamethylene diisocyanate, decamethylene diisocyanate, 3-butoxyhexane diisocyanate, 1,4-butylene glycol dipropyl ether diisocyanate, and thiodihexyl diisocyanate; aromatic diisocyanates such as m-phenylene diisocyanate, p-phenylene diisocyanate, 2,4-tolylene diisocyanate, 2,6-tolylene diisocyanate, dimethylbenzene diisocyanate, ethylbenzene diisocyanate, isopropylbenzene diisocyanate, tolidine diisocyanate, 1,4-naphthalene diisocyanate, 1,5-naphthalene diisocyanate, 2,6-naphthalene diisocyanate, 2,7-naphthalene diisocyanate, metaxylylene diisocyanate, paraxylylene diisocyanate, and tetramethylxylene diisocyanate; and alicyclic diisocyanates such as hydrogenated xylene diisocyanate, isophorone diisocyanate, and dicyclohexylmethane 4,4'-diisocyanate.

Examples of the hydroxyl group-containing (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, phenylglycidyl ether (meth)acrylate, pentaerythritol (meth)acrylate, and dipentaerythritol penta(meth)acrylate.

Examples of a commercially available product of the urethane (meth)acrylate include CN996 (bifunctional urethane acrylate, weight-average molecular weight (Mw) = 2,850) of Sartomer Company Inc.; UA-122P (bifunctional urethane acrylate, Mw = 1,100) of SHIN-NAKAMURA CHEMICAL CO, LTD.; and Shikoh (registered trademark) UV-6630B (bifunctional urethane acrylate, Mw = 3,000) of NIHON GOSEI KAKO Co., Ltd., Shikoh (registered trademark) UV-3310B (bifunctional urethane acrylate, Mw = 5,000), and Shikoh (registered trademark) UV-7630B (hexafunctional urethane acrylate, Mw = 2,200) of NIHON GOSEI KAKO Co., Ltd.

Examples of the polyfunctional polymerizable compound also include a silicone compound having an ethylenically unsaturated group.

The silicone compound having an ethylenically unsaturated group is preferably silicone polyether acrylate, more preferably polyfunctional silicone polyether acrylate, and still more preferably pentafunctional or hexafunctional silicone polyether acrylate.

Examples of the bifunctional polymerizable compound and the tri- or higher functional polymerizable compound described above also include epoxy (meth)acrylate.

Here, the epoxy (meth)acrylate means a reaction product of a reaction between a carboxy group in (meth)acrylic acid and two or three epoxy groups in an epoxy compound including two or three epoxy groups. That is, the structure of the epoxy (meth)acrylate does not include an epoxy group.

Examples of the epoxy (meth)acrylate include a reaction product of (meth)acrylic acid and an epoxy resin.

Examples of the epoxy resin include a bisphenol A-type epoxy resin and a cresol novolac-type epoxy resin.

A content of the polymerizable compound is preferably 50% by mass to 95% by mass and more preferably 60% by mass to 90% by mass with respect to the total amount of the ink.

Among these, the polymerizable compound contained in the first ink preferably includes a polymerizable compound having an amide structure. Hereinafter, the polymerizable compound having an amide structure will be referred to as "polymerizable compound A".

In the present disclosure, the amide structure means a structure represented by "-C(=O)-N<". Atoms bonded to each of a terminal carbon atom and a terminal nitrogen atom are not particularly limited, and examples thereof include hydrogen atoms and carbon atoms.

In a case where the polymerizable compound A is contained in the first ink, a part of the polymerizable compound A migrates to the second ink in a case where the second ink is applied after the first ink is applied. By the migration of the polymerizable compound A, an energy of a second ink film is improved, and the metal particles contained in the second ink are promoted to be pushed up to a gas-liquid interface, thereby further improving metallic lustrousness of the image. In addition, movement of the metal particles contained in the second ink to the gas-liquid interface is accelerated, and even in a case where high-speed printing is performed, brightness of the image is lowered, thereby obtaining an image with a visually massive feeling.

Examples of the polymerizable compound A include the above-described monofunctional (meth)acrylamide, bifunctional (meth)acrylamide, 3-(meth)acryloyl-2-oxazolidinone, N-vinylpyrrolidone, and N-vinylcaprolactam.

From the viewpoint of improving a movement speed of the metal particles contained in the second ink to the gas-liquid interface, a content of the polymerizable compound A is preferably 5% by mass to 50% by mass, more preferably 10% by mass to 50% by mass, and still more preferably 15% by mass to 50% by mass with respect to a total amount of the first ink.

The first ink preferably contains a polyfunctional polymerizable compound, and more preferably contains a monofunctional polymerizable compound and a polyfunctional polymerizable compound, as the polymerizable compound. By containing the polyfunctional polymerizable compound in the first ink, a first ink film having excellent curing properties can be formed. In a case where the first ink film has high curing properties, a surface of the first ink film is smoothed. As a result, in a case where the second ink is applied onto the first ink film, smoothness of the surface of the second ink film is also obtained, and the image having excellent metallic lustrousness is obtained.

From the viewpoint of improving the metallic lustrousness of the image, a proportion of the polyfunctional polymerizable compound that accounts for the polymerizable compound is preferably 1% by mass to 50% by mass, and more preferably 10% by mass to 40% by mass.

In addition, it is preferable that the first ink contains a monofunctional polymerizable compound including at least one structure selected from the group consisting of a cyclic ether structure and an alicyclic structure, as the polymerizable compound. Hereinafter, the monofunctional polymerizable compound including at least one structure selected from the group consisting of the cyclic ether structure and the alicyclic structure will be described as a "polymerizable compound B".

The polymerizable compound having a ring structure tends to have a high glass transition temperature, and since a balance between elasticity and viscosity of the ink film is good, in a case where the polymerizable compound B is contained in the first ink, adhesiveness with the substrate is improved.

In the polymerizable compound B, examples of the cyclic ether structure include a furan ring structure, a pyran ring structure, an oxirane ring structure, an oxetane ring structure, a dioxane ring structure, a dioxolane ring structure, and a morpholine ring structure.

In the polymerizable compound B, the number of carbons constituting a ring of the alicyclic structure is not particularly limited, but is preferably 5 to 10. Examples of the alicyclic structure include a cyclohexane ring structure, a dicyclopentanyl ring structure, a dicyclopentenyl ring structure, a norbornane ring structure, an isobornane ring structure, a norbornene ring structure, an isobornene ring structure, and an adamantane ring structure.

Examples of the polymerizable compound B include the following compounds. The acryloylmorpholine also corresponds to the above-described polymerizable compound A.

**[Table 1]**

| Name | Structural formula |
|---|---|
| Acryloylmorpholine (ACMO) | 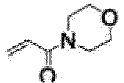 |
| Cyclic trimethylolpropane formal acrylate (CTFA) | 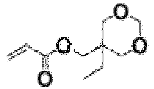 |
| Acrylic acid-1,4-dioxaspiro[4,5]dec-2-ylmethyl | 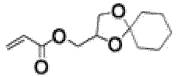 |
| Tetrahydrofurfuryl acrylate (THFA) | 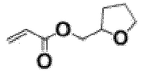 |
| (2-methyl-2-ethyl-1,3-dioxolan-4-yl)methyl acrylate | 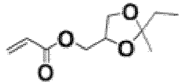 |
| Cyclohexyl acrylate | 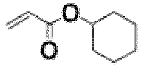 |
| Dicyclopentenyloxyethyl acrylate | 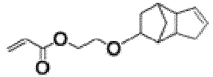 |
| Dicyclopentanyl methyl acrylate | 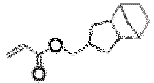 |
| Dicyclopentanyl acrylate | 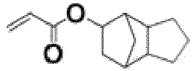 |
| Dicyclopentenyloxy acrylate | 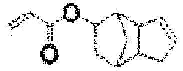 |
| Isobornyl acrylate | 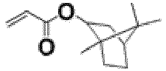 |
| t-butyl cyclohexyl acrylate | 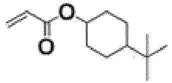 |
| 3,3,5-trimethylcyclohexyl acrylate | 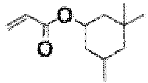 |

In addition, the polymerizable compound B preferably includes a cyclic ether structure. In a case where the cyclic ether structure is included, odor tends to decrease.

From the viewpoint of the adhesiveness with the substrate, a content of the polymerizable compound B is preferably 45% by mass or more, more preferably 60% by mass to 80% by mass, and still more preferably 65% by mass to 80% by mass with respect to the total amount of the first ink.

The polymerizable compound contained in the first ink preferably includes the polymerizable compound A and the polymerizable compound B.

In the first ink, a mass ratio of the content of the polymerizable compound B to the content of the polymerizable compound A is preferably 1 to 10, more preferably 1 to 5, and still more preferably 1 to 4.

In the first ink, a total content of all the polymerizable compounds contained in the first ink is preferably 70% by mass to 90% by mass, and more preferably 80% by mass to 90% by mass with respect to the total amount of the first ink.

### (Photopolymerization initiator)

The first ink preferably contains at least one photopolymerization initiator.

The polymerization initiator is preferably a photoradical polymerization initiator that generates radicals by being irradiated with light.

Examples of the photoradical polymerization initiator include (a) an alkylphenone compound, (b) an acylphosphine oxide compound, (c) an aromatic onium salt compound, (d) an organic peroxide, (e) a thio compound (for example, a thioxanthone compound such as isopropylthioxanthone), (f) a hexaarylbiimidazole compound, (g) a ketoxime ester compound, (h) a borate compound, (i) an azinium compound, (j) a metallocene compound, (k) an active ester compound, (1) a carbon halogen bond-containing compound, and (m) an alkylamine compound.

Among these, it is preferable that the photopolymerization initiator includes an acylphosphine oxide compound.

Examples of the acylphosphine oxide compound include bis(2,4,6-trimethylbenzoyl)phenylphosphine oxide, bis(2,6-dimethylbenzoyl)phenylphosphine oxide, bis(2,4,6-trimethylbenzoyl)-2-methoxyphenylphosphine oxide, bis(2,6-dimethylbenzoyl)-2-methoxyphenylphosphine oxide, bis(2,4,6-trimethylbenzoyl)-2,4-dimethoxyphenylphosphine oxide, bis(2,6-dimethylbenzoyl)-2,4-dimethoxyphenylphosphine oxide, bis(2,4,6-trimethylbenzoyl)-2,4-dipentyloxyphenylphosphine oxide,bis(2,6-dimethylbenzoyl)-2,4-dipentyloxyphenylphosphine oxide, 2,4,6-trimethylbenzoyl ethoxyphenylphosphine oxide, 2,6-dimethylbenzoyl ethoxyphenylphosphine oxide, 2,4,6-trimethylbenzoyl methoxyphenylphosphine oxide, bis(2,6-dimethoxybenzoyl)-2,4,4-trimethylpentylphenylphosphine oxide, 2,4,6-trimethylbenzoyl diphenylphosphine oxide, 2,6-dimethylbenzoyl methoxyphenylphosphine oxide, 2,4,6-trimethylbenzoyl(4-pentyloxyphenyl)phenylphosphine oxide, and 2,6-dimethylbenzoyl(4-pentyloxyphenyl)phenylphosphine oxide.

Among these, as the acylphosphine oxide compound, bis(2,4,6-trimethylbenzoyl)phenylphosphine oxide or 2,4,6-trimethylbenzoyldiphenylphosphine oxide is preferable.

The photopolymerization initiator may be a low-molecular-weight photopolymerization initiator having a molecular weight of less than 500, or a high-molecular-weight photopolymerization initiator having a molecular weight of 500 or more.

A molecular weight of the photopolymerization initiator is preferably 500 to 3,000, more preferably 700 to 2,500, and still more preferably 900 to 2,100.

For the photopolymerization initiator, the publications such as JP2017-105902A (paragraphs 0038 and the like) and JP2017-522364A (paragraphs 0017 to 0053) can be referred to.

Examples of commercially available radical polymerization initiators include Omnirad TPO H, Omnirad 819, Omnirad 369, Omnirad 907, Omnirad 2959, Omnipol 910, Omnipol TX, and Omnipol 9210 (all of which are manufactured by IGM Resins B.V); and Speedcure 7005, Speedcure 7010, Speedcure 7010L, Speedcure 7040, and Speedcure TPO (manufactured by Lambson Ltd.).

A content of the photopolymerization initiator is preferably 1% by mass to 20% by mass, and more preferably 5% by mass to 15% by mass with respect to the total amount of the first ink.

On the other hand, in a case where the first ink is an ink that is cured by an electron beam as the active energy ray, the content of the photopolymerization initiator with respect to the total amount of the first ink may be less than 1% by mass.

Here, the fact that the content of the photopolymerization initiator with respect to the total amount of the first ink is less than 1% by mass means that the first ink does not contain a photopolymerization initiator or that, even in a case where the photopolymerization initiator is contained, the content of the photopolymerization initiator with respect to the total amount of the first ink is less than 1% by mass.

### (Surfactant)

The first ink may contain at least one surfactant.

Examples of the surfactant include surfactants described in JP1987-173463A (JP-S62-173463A) and JP1987-183457A (JP-S62-183457A). In addition, examples of the surfactant include anionic surfactants such as dialkyl sulfosuccinate, alkyl naphthalene sulfonate, and a fatty acid salt; nonionic surfactants such as polyoxyethylene alkyl ether, polyoxyethylene alkyl allyl ether, acetylene glycol, and a polyoxyethylene-polyoxypropylene block copolymer; and cationic surfactants such as an alkylamine salt and a quaternary ammonium salt. In addition, the surfactant may be a fluorine-based surfactant or a silicone-based surfactant.

From the viewpoint of setting the surface tension of the ink to 30 mN/m or more, it is preferable that the first ink does not contain a surfactant, or a content of the surfactant is less than 0.01% by mass.

### (Polymerization inhibitor)

The first ink preferably contains at least one polymerization inhibitor.

Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-l-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).

Among these, as the polymerization inhibitor, at least one selected from p-methoxyphenol, catechols, quinones, alkylphenols, TEMPO, TEMPOL, or tris(N-nitroso-N-phenylhydroxylamine)aluminum salt is preferable, and at least one selected from p-methoxyphenol, hydroquinone, benzoquinone, BHT, TEMPO, TEMPOL, or tris(N-nitroso-N-phenylhydroxylamine)aluminum salt is more preferable.

In a case where the first ink contains the polymerization inhibitor, a content of the polymerization inhibitor is preferably 0.01% by mass to 5.0% by mass, more preferably 0.05% by mass to 4.0% by mass, and particularly preferably 0.1% by mass to 3.0% by mass with respect to the total amount of the first ink.

### (Other Components)

The first ink may contain other components in addition to the above-described components as necessary.

Examples of the other components include colorants (for example, pigments and dyes), resins, dispersants, wax, antioxidants, antifading agents, conductive salts, and basic compounds. It is preferable that the first ink does not contain metal particles.

### (Physical properties)

The surface tension of the first ink is 30 mN/m or more. In a case where the surface tension of the first ink is 30 mN/m or more, even in a case where some components contained in the first ink migrate to the second ink in a case where the second ink is applied after the first ink is applied, it is possible to suppress a decrease in surface tension of the second ink due to the migration of the components. In a case where the surface tension of the second ink is high, the metal particles are likely to be collected at the gas-liquid interface, and since a speed at which the metal particles are unevenly distributed on the surface of the second ink film is fast, even in a case where high-speed printing is performed, the image with a visually massive feeling is obtained.

From the viewpoint of image quality, the surface tension of the first ink is preferably 40 mN/m or less. That is, the surface tension of the first ink is preferably 30 mN/m to 40 mN/m and more preferably 32 mN/m to 38 mN/m.

The surface tension means a value measured at 25°C.

The surface tension is a value measured using a surface tensiometer, and can be measured using, for example, product name "Automatic Surface Tentiometer CBVP-Z (manufactured by Kyowa Interface Science Co., Ltd.)".

A viscosity of the first ink is preferably 5 mPa s to 50 mPa s, more preferably 10 mPa s to 30 mPa·s, and still more preferably 10 mPa·s to 25 mPa·s.

The viscosity means a value measured at 25°C.

The viscosity is a value measured using a viscometer, and can be measured using, for example, VISCOMETER RE-85L (manufactured by TOKI SANGYO CO., LTD.).

### <Second ink>

The second ink contained in the ink set according to the present disclosure contains metal particles containing indium and a polymerizable compound.

### (Metal particles)

The second ink contains at least one metal particle containing indium.

A shape of the metal particles is not particularly limited, and examples thereof include a circular shape, an elliptical shape, a rectangular shape, a scaly shape, and an indefinite shape. Among these, the shape of the metal particles is preferably scale-like. In the present disclosure, the term "scale-like" means a thin and flat shape, and is a concept including a flat plate shape and a curved plate shape.

Since the metal particles contain indium, the metallic lustrousness of the obtained image is excellent. In addition, in a case where the metal particles containing indium are unevenly distributed on the surface of the second ink film formed by the second ink, whiteness of the image is suppressed, and brightness is lowered, thereby obtaining a visually massive feeling of the image.

The metal particles may contain a metal other than indium. Examples of metals other than indium include nickel, aluminum, iron, chromium, silver, gold, platinum, tin, zinc, titanium, and copper.

Among these, from the viewpoint of further improving the metallic lustrousness, it is preferable that the metal contained in the metal particles is only indium.

The metal particles may contain a non-metallic element (for example, oxygen (O), nitrogen (N), carbon (C), and the like).

A content of the metal with respect to the total amount of the metal particles is preferably 50% by mass or more, more preferably 60% by mass or more, and still more preferably 80% by mass or more.

An average particle diameter of the metal particles is not particularly limited, but is preferably 0.05 µm to 0.5 µm and more preferably 0.1 µm to 0.4 µm.

In a case where the average particle diameter is 0.05 µm or more, the metallic lustrousness of the image is improved. In a case where the average particle diameter is 0.5 µm or less, storage stability and jettability of the second ink are improved.

The average particle diameter herein means an average value (average primary particle diameter) of primary particle diameters of the metal particles.

The average particle diameter of the metal particles is measured using a particle size distribution analyzer. By using a laser diffraction/scattering-type particle size distribution analyzer, a 50% cumulative volume-based diameter (D50) of the metal particles is measured three times, and an average value of the diameters measured three times is calculated and adopted as the average particle diameter of the metal particles. As the laser diffraction/scattering-type particle size distribution analyzer, for example, a product name "LA-960" manufactured by Horiba, Ltd. can be used. The average particle diameter of the metal particles is an average particle diameter in a case where the shape of the metal particles is assumed to be spherical.

An average aspect ratio of the metal particles is not particularly limited, but is preferably 5 to 100, more preferably 5 to 50, and still more preferably 5 to 20.

In a case where the average aspect ratio is 5 or more, the metallic lustrousness of the image is improved. In a case where the average aspect ratio is 100 or less, manufacturing suitability of the metal particles is improved.

In the present disclosure, the average aspect ratio means a ratio of an average equivalent circle diameter to an average thickness.

The average equivalent circle diameter and the average thickness of the metal particles are measured using the following method.

As a liquid sample, a metal particle dispersion which contains metal particles as a dispersoid and propylene glycol monomethyl ether (PGME) as a dispersion medium is prepared (concentration of the metal particles: 20% by mass).

The liquid sample is applied onto a polyethylene terephthalate (PET) film to obtain a coating film.

A surface of the above-described coating film is observed with a scanning electron microscope (SEM) (for example, Nova 200 FIB-SEM manufactured by Thermo Fisher Scientific Inc.; the same applies hereinafter), and from the obtained SEM image, 50 metal particles are selected and an equivalent circle diameter of each metal particle is measured. An arithmetic mean value of the equivalent circle diameters of the 50 metal particles is calculated and adopted as the average equivalent circle diameter of the metal particles.

A cross section of the above-described coating film is observed with SEM, and from the obtained SEM image, 50 metal particles are selected and a thickness of each metal particle is measured. An arithmetic mean value of the thicknesses of the 50 metal particles is calculated and adopted as the average thickness of the metal particles.

The average thickness of the metal particles is not particularly limited, but from the viewpoint of improving the metallic lustrousness of the image, it is preferably 10 nm to 50 nm, more preferably 15 nm to 45 nm, and still more preferably 20 nm to 40 nm.

Examples of a planar shape of the metal particles include a polygonal shape, an elliptical shape, and an indefinite shape. From the viewpoint of improving the metallic lustrousness of the image, it is preferable that the metal particles have a contour in which a straight line and a curve are bonded to each other in a plan view. In addition, it is preferable that the metal particles have an R-shaped contour in the plan view.

In the present disclosure, the R shape means a shape in which a vertex where two sides are in contact with each other does not exist. In short, it is preferable that the metal particles have a rounded contour in the plan view. The contour of the metal particles in the plan view may have a concave portion.

It is preferable that at least a part of the surface of the metal particles is coated with a polymer, and it is more preferable to be coated with at least one polymer selected from the group consisting of cellulose acetate butyrate, cellulose acetate propionate, and cellulose acetate.

In a case where the surface of the metal particles is coated with the above-described polymer, surface energy of the above-described polymer pushes the metal particles up to the gas-liquid interface of the ink together with the above-described polymer. The metal particles are collected at the gas-liquid interface of the ink and are unevenly distributed on the surface of the ink film after the ink is cured, so that an image having excellent metallic lustrousness is obtained.

The metal particles coated with the above-described polymer are preferably flakes peeled from a metal film. The flakes of the metal film are obtained, for example, by the following method.

At least one polymer selected from the group consisting of cellulose acetate butyrate, cellulose acetate propionate, and cellulose acetate is applied onto a substrate to form a polymer layer. A metal film containing a metal is formed on the polymer layer. The polymer layer is dissolved to peel off the metal film. By cracking or crushing the metal film, the metal particles are obtained.

The metal film may be peeled off in a state in which the polymer layer is adsorbed on one surface. By cracking or crushing the metal film in the state in which the polymer layer is adsorbed on one surface of the metal film, the metal particles coated with the above-described polymer are obtained.

Examples of a method of forming the metal film include vapor deposition and sputtering. For example, a metal film containing indium forms, during the vapor deposition, a sea-island structure scattered in an island shape without being a continuous film. Therefore, the metal particles are obtained only by cracking without applying a large force. The flakes of the metal film containing indium (that is, the metal particles containing indium) have an R-shaped contour in the plan view.

A content of the metal particles is preferably 0.5% by mass to 10% by mass and more preferably 1.0% by mass to 8.0% by mass with respect to the total amount of the second ink.

### (Polymerizable compound)

The second ink contains at least one polymerizable compound.

Examples of the polymerizable compound contained in the second ink include the same polymerizable compound as the polymerizable compound contained in the first ink.

Among these, from the viewpoint of reducing surface curing properties, the second ink preferably contains the above-described polymerizable compound B. In a case where the surface curing properties of the second ink film are reduced, smoothness of the surface of the second ink film is improved, the image with a visually massive feeling is obtained, and the metallic lustrousness is improved.

It is preferable that the second ink contains a polyfunctional polymerizable compound as the polymerizable compound. By containing the polyfunctional polymerizable compound in the second ink, a second ink film having excellent curing properties can be formed.

A content of the polyfunctional polymerizable compound is preferably 40% by mass or more, and more preferably 50% by mass or more with respect to the total amount of the second ink. An upper limit of the above-described content is not particularly limited, and is, for example, 80% by mass.

The second ink preferably contains, as the polymerizable compound, a fluorine-containing polymerizable compound that is a polymerizable compound containing a fluorine atom. The fluorine atom included in the fluorine-containing polymerizable compound may be only one or two or more.

In the present disclosure, the fluorine-containing polymerizable compound is a compound having a fluorine atom and a polymerizable group.

The fluorine-containing polymerizable compound is susceptible to polymerization inhibition by oxygen. Therefore, in a case where the fluorine-containing polymerizable compound is contained in the second ink, the curing properties of the surface of the second ink film are reduced. In a step of polymerizing the polymerizable compound contained in the second ink to cure the second ink film, the curing proceeds in a state where the surface of the second ink film is smooth, and the second ink film having a smooth surface is formed, so that an image having excellent metallic lustrousness is obtained.

From the viewpoint of reactivity, the fluorine-containing polymerizable compound is preferably a (meth)acrylate having a fluorine atom.

Examples of the fluorine-containing polymerizable compound include 2,2,2-trifluoroethyl (meth)acrylate, 2,2,3,3-tetrafluoropropyl (meth)acrylate, 2,2,3,4,4,4-hexafluorobutyl (meth)acrylate, hexafluoro-2-propyl (meth)acrylate, 2,2,3,3,4,4,5,5-octafluoropentyl (meth)acrylate, 3,3,4,4,5,5,6,6,6-nonafluorohexyl (meth)acrylate, 2,2,3,3,4,4,5,5,6,6,7,7-dodecafluoroheptyl (meth)acrylate, and 3,3,4,4,5,5,6,6,7,7,8,8,8-tridecafluorooctyl (meth)acrylate.

A content of the fluorine-containing polymerizable compound is preferably 0.5% by mass to 10% by mass, and more preferably 1.0% by mass to 5.0% by mass with respect to the total amount of the second ink.

In the second ink, a total content of all the polymerizable compounds contained in the second ink is preferably 70% by mass to 90% by mass, and more preferably 75% by mass to 85% by mass with respect to the total amount of the second ink.

### (Photopolymerization initiator)

The second ink preferably contains at least one photopolymerization initiator.

A preferred aspect of the photopolymerization initiator contained in the second ink is the same as a preferred aspect of the photopolymerization initiator contained in the first ink.

### (Surfactant)

The second ink may contain at least one surfactant.

From the viewpoint of setting the surface tension of the second ink to 30 mN/m or more, it is preferable that the second ink does not contain a surfactant, or a content of the surfactant is less than 0.01% by mass.

### (Polymerization inhibitor)

The second ink preferably contains at least one polymerization inhibitor.

A preferred aspect of the polymerization inhibitor contained in the second ink is the same as a preferred aspect of the polymerization inhibitor contained in the first ink.

### (Other Components)

The second ink may contain other components in addition to the above-described components as necessary.

Examples of the other components include colorants (for example, pigments and dyes), resins, dispersants, wax, antioxidants, antifading agents, conductive salts, and basic compounds.

### (Physical properties)

The surface tension of the second ink according to the embodiment of the present disclosure is preferably 30 mN/m or more. In a case where the surface tension of the second ink is 30 mN/m or more, the metal particles are likely to be collected at the gas-liquid interface, and the metal particles are unevenly distributed on the surface of the image, and thus the metallic lustrousness of the image is improved.

From the viewpoint of image quality, the surface tension of the second ink is preferably 40 mN/m or less. That is, the surface tension of the second ink is preferably 30 mN/m to 40 mN/m and more preferably 32 mN/m to 38 mN/m.

A viscosity of the second ink is preferably 5 mPa·s to 50 mPa·s, more preferably 10 mPa s to 30 mPa s, and still more preferably 10 mPa s to 25 mPa s.

### [Image recording method]

The image recording method according to the present disclosure in which the above-described ink set is used includes a step (hereinafter, also referred to as a "first ink applying step") of applying the first ink onto a substrate using an inkjet recording method, a step (hereinafter, also referred to as a "first ink film forming step") of forming the first ink film by irradiating the first ink applied onto the substrate with an active energy ray A, a step (hereinafter, also referred to as a "second ink applying step") of applying the second ink onto the first ink film using an inkjet recording method, and a step (hereinafter, also referred to as an "image recording step") of recording an image by irradiating the second ink applied onto the first ink film with an active energy ray B.

### <First ink applying step>

The first ink applying step includes applying the first ink onto a substrate using an inkjet recording method.

The substrate may be a permeable substrate such as paper, or an impermeable substrate.

In the image recording method according to the embodiment of the present disclosure, since the image is recorded by being irradiated with an active energy ray, even in a case where the substrate is an impermeable substrate, it is easy to ensure adhesiveness between the substrate and the image.

In the present disclosure, the impermeable substrate refers to a substrate having a water absorption rate (% by mass, 24 hr) of less than 0.2 in ASTM D570 which is the ASTM test method.

In the present disclosure, the permeable substrate refers to a substrate having a water absorption rate (% by mass, 24 hr) of 0.2 or more in ASTM D570 which is the ASTM test method.

Examples of the impermeable substrate include glass, quartz, a plastic film, and leather.

Examples of a resin constituting the plastic film include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene (PS), polystyrene, polypropylene (PP), a polycycloolefin resin, a polyimide resin, a polycarbonate (PC) resin, and polyvinyl acetal.

The plastic film may be a film containing only one of these resins or a film containing two or more of these resins.

Examples of the leather include natural leather (also called "real leather") and synthetic leather (for example, polyvinyl chloride (PVC) leather or polyurethane (PU) leather). For the leather, for example, paragraphs 0163 to 0165 of JP2009-058750A can be referred to.

A thickness of the impermeable substrate is not particularly limited, but is preferably 10 µm to 2,000 µm, more preferably 20 µm to 1,000 µm, still more preferably 30 µm to 500 µm, and particularly preferably 30 µm to 400 µm.

Examples of the permeable substrate include paper and cloth.

Examples of the paper include uncoated paper (for example, high-quality paper or the like), coated paper, paperboard, liner paper used for corrugated cardboard, and cloth. The paperboard may be provided with a coating layer.

As the permeable substrate, coated paper or a paperboard provided with a coating layer is preferable. The ink slowly permeates into the coated paper or the paperboard provided with a coating layer, so that the metallic lustrousness of an image recorded on the coated paper or the paperboard is likely to be more strongly expressed.

The inkjet recording method is not particularly limited as long as it is a system capable of recording an image, and a known system can be used. Examples of the inkjet recording method include an electric charge control system of jetting ink by using an electrostatic attraction force; a drop-on-demand system (pressure pulse system) using a vibration pressure of a piezo element; an acoustic inkjet system of converting an electric signal into an acoustic beam, irradiating ink, and jetting the ink using a radiation pressure; and a thermal inkjet (Bubble jet (registered trademark)) system of heating ink to form air bubbles and utilizing the generated pressure.

Examples of inkjet heads used in the inkjet recording method include inkjet heads for a shuttle system using short serial heads that are caused to scan a substrate in a width direction of the substrate to perform recording and inkjet heads for a line system using line heads that each consist of recording elements arranged for the entire area of each side of a substrate.

In the line system, pattern formation can be performed on the entire surface of a substrate by scanning the substrate in a direction perpendicular to a direction in which the recording elements are arranged, and a transport system such as a carriage that scans a short head is unnecessary. In addition, in the line system, complicated scanning control for moving a carriage and a substrate is not necessary, and only a substrate moves. Therefore, the recording speed can be further increased in the line system than in the shuttle system.

A liquid droplet volume of the ink jetted from the inkjet head is preferably 1 pL (picoliter) to 100 pL, more preferably 3 pL to 80 pL, and still more preferably 3 pL to 50 pL.

### <First ink film forming step>

The first ink film forming step includes forming a first ink film by irradiating the first ink applied onto the substrate with the active energy ray A.

In the first ink film forming step, the first ink applied onto the substrate is irradiated with the active energy ray A to polymerize the polymerizable compound in the first ink, thereby forming the first ink film. The active energy ray A is preferably ultraviolet rays.

A peak wavelength of the ultraviolet rays is, for example, preferably 200 nm to 405 nm, more preferably 250 nm to 400 nm, and still more preferably 300 nm to 400 nm.

As a light source for ultraviolet irradiation, a mercury lamp, a gas laser, and a solid-state laser are mainly used, and a mercury lamp, a metal halide lamp, and an ultraviolet fluorescent lamp are widely known. In addition, a light emitting diode (UV-LED) and a laser diode (UV-LD) are compact, long-life, highly efficient, and low-cost, and are expected to be used as the light source for ultraviolet irradiation. Among these, the light source for ultraviolet irradiation is preferably a metal halide lamp, a high-pressure mercury lamp, a medium-pressure mercury lamp, a low-pressure mercury lamp, or UV-LED.

The first ink film forming step may be an aspect in which the content of the photopolymerization initiator in the first ink is less than 1% by mass with respect to the total amount of the ink and in which curing is performed by irradiation with an electron beam as the active energy ray A. Since the content of the photopolymerization initiator is less than 1% by mass, elution of the photopolymerization initiator from the image can be further suppressed. Accordingly, the image recording method of this aspect is particularly suitable as a method of manufacturing, for example, an image recorded material for food packaging.

In the first ink film forming step, the first ink film may be temporarily cured, or the first ink film may be subjected to main curing.

Roughly speaking, the main curing means polymerizing substantially all of the polymerizable compounds in the ink film such that the ink film is substantially completely cured.

Specifically, the main curing means curing the ink film by polymerizing the polymerizable compounds in the ink film until a curing rate of the ink film (that is, a polymerization rate of the polymerizable compounds determined by high-performance liquid chromatography) reaches 90% to 100%.

In the present disclosure, the irradiation with the active energy ray for the main curing may be called "curing exposure", and the active energy ray for the main curing may be called "curing exposure light".

Meanwhile, roughly speaking, the temporary curing is polymerizing only some of the polymerizable compounds in the ink film.

The temporary curing is specifically to temporarily cure the ink film by polymerizing a part of the polymerizable compound in the ink film to such an extent that the curing rate of the ink film is less than 90%.

In the present disclosure, the irradiation with the active energy ray for the temporary curing may be called "pinning exposure", and the active energy ray for the temporary curing may be called "pinning exposure light".

In the first ink film forming step, in a case where the first ink is applied to the entire surface of the substrate, it is preferable that the first ink film is subjected to the main curing.

From the viewpoint of further improving the adhesiveness between the substrate and the image, an illuminance of the active energy ray A as the curing exposure light is preferably 1.0 W/cm² or more, more preferably 2.0 W/cm² or more, and still more preferably 4.0 W/cm² or more.

The upper limit value of the illuminance of the active energy ray A as the curing exposure light is not particularly limited, and is, for example, 10 W/cm².

From the viewpoint of further improving the adhesiveness between the substrate and the image, irradiation energy (that is, an exposure amount) of the active energy ray A as the curing exposure light is preferably 500 mJ/cm² or more and more preferably 800 mJ/cm² or more.

The upper limit value of the exposure amount of the active energy ray A as the curing exposure light is not particularly limited, and is, for example, 2,000 mJ/cm².

### <Second ink applying step>

The second ink applying step includes applying the second ink onto the first ink film using an inkjet recording method.

A preferred aspect of a method of applying the second ink is the same as that of a preferred aspect of a method of applying the first ink.

### <Image recording step>

The image recording step includes recording an image by irradiating the second ink applied onto the first ink film with the active energy ray B.

In the image recording step, the second ink applied onto the first ink film is irradiated with the active energy ray B to polymerize the polymerizable compound in the second ink, thereby forming the second ink film. As a result, the image is recorded. The active energy ray B is preferably ultraviolet rays.

The active energy ray B is preferably curing exposure light.

A preferred aspect of the active energy ray B as the curing exposure light is the same as the preferred aspect of the active energy ray A as the curing exposure light.

The image recording step preferably includes a step of temporarily curing the second ink by irradiation with an active energy ray B 1 having an irradiation energy lower than an irradiation energy of the active energy ray B, and a step of irradiating the ink film formed by the temporary curing of the second ink with the active energy ray B. In a case where the image recording step includes the temporary curing step, line quality of the image is improved.

A curing rate of the temporarily cured second ink film is more preferably 80% or less, still more preferably 70% or less, and even more preferably 50% or less.

The curing rate of the temporarily cured second ink film is preferably 10% or more, more preferably 20% or more, and still more preferably 30% or more.

An illuminance of the active energy ray B1 as the pinning exposure light is preferably 0.10 W/cm² to 0.50 W/cm², more preferably 0.20 W/cm² to 0.49 W/cm², and still more preferably 0.20 W/cm² to 0.45 W/cm².

Irradiation energy (that is, an exposure amount) of the active energy ray B1 as the pinning exposure light is preferably 50 mJ/cm² to 500 mJ/cm² and more preferably 100 mJ/cm² to 300 mJ/cm².

The image recording method of the present disclosure may include steps other than the above-described steps. For example, the image recording method according to the present disclosure may further include a step of applying, onto the second ink film formed of the second ink, a third ink, which is an active energy ray curable-type inkjet ink containing a colorant and a polymerizable compound, using an inkjet recording method, and a step of recording an image by irradiating the third ink applied onto the second ink film with an active energy ray C.

As the colorant contained in the third ink, a generally known colorant can be used. In addition, the irradiation with the active energy ray C can be performed in the same method as that of the irradiation with the above-described active energy ray A. A color metallic image can be obtained by applying the third ink (specifically, a colored ink) onto the second ink film.

In addition, for example, the image recording method according to the present disclosure may further include a step of applying, onto the third ink film formed of the third ink, a fourth ink, which is an active energy ray curable-type inkjet ink containing a polymerizable compound, using an inkjet recording method, and a step of recording an image by irradiating the fourth ink applied onto the third ink film with an active energy ray D. The fourth ink is a clear ink that does not contain a colorant.

The irradiation with the active energy ray D can be performed in the same method as that of the irradiation with the above-described active energy ray A. A glossy color metallic image can be obtained by applying the fourth ink (specifically, the clear ink) onto the third ink film.

### [Image recorded material]

The image recorded material of the present disclosure includes a substrate, and an image disposed on the substrate, in which the image includes a first ink layer formed on a surface of the substrate and a second ink layer formed on a surface of the first ink layer, and metal particles containing indium are present only in a region up to 70% of a thickness of the second ink layer from a surface of the second ink layer toward an inside of the second ink layer.

A preferred aspect of the substrate in the image recorded material according to the present disclosure is as described in the section of the above-described "Image recording method".

It is preferable that the image disposed on the substrate is an image recorded on the substrate by using the above-described image recording method. Specifically, the above-described first ink can be applied onto the substrate to irradiate the first ink applied onto the substrate with the active energy ray, so that the first ink layer can be formed. In addition, the above-described second ink can be applied onto the first ink layer to irradiate the second ink applied onto the first ink layer with the active energy ray, so that the second ink layer can be formed. Therefore, the first ink layer preferably contains a polymer of the polymerizable compound contained in the above-described first ink. In addition, the second ink layer preferably contains a polymer of the polymerizable compound contained in the above-described second ink.

In the image recorded material of the present disclosure, the second ink layer contains metal particles containing indium, and the metal particles containing indium are present only in the region up to 70% of the thickness of the second ink layer from the surface of the second ink layer (that is, the surface of the image) toward the inside of the second ink layer. In other words, from an interface between the first ink layer and the second ink layer, toward the inside of the second ink layer, the metal particles containing indium are not present in a region up to 30% of the thickness of the second ink layer.

In the image recorded material according to the embodiment of the present disclosure, since the metal particles containing indium are unevenly distributed in the vicinity of the surface of the image, a visually massive feeling is obtained.

A preferred aspect of the metal particles containing indium is as described in the section of the above-described image recording method.

### Examples

Hereinafter, the present disclosure will be described in more detail based on examples, but the present disclosure is not limited to the following examples unless the gist thereof is overstepped.

### <Preparation of metal particle dispersion>

### (1) Indium particle dispersion

A 5.0% by mass solution of cellulose acetate butyrate dissolved in ethyl acetate was applied onto a polyethylene terephthalate (PET) film having a film thickness of 50 µm using a gravure coater. The coating solution was dried to form a polymer layer.

A metal film containing indium was formed on the polymer layer by a vacuum vapor deposition method, thereby obtaining a laminate consisting of the PET film, the polymer layer, and the metal film. The laminate was immersed in propylene glycol monomethyl ether (PGME) to dissolve the polymer layer. A miniaturization treatment and a dispersion treatment were performed by using an ultrasonic disperser, thereby obtaining an indium particle dispersion containing indium particles in which at least a part of the surface was coated with the polymer.

The obtained dispersion was filtered through a SUS mesh filter having an opening of 5 µm, and a solvent was removed using an evaporator or the like or was added as necessary, thereby obtaining an indium particle dispersion having a predetermined concentration.

### (2) Aluminum particle dispersion

An aluminum particle dispersion was obtained by the same method as that for the indium particle dispersion, except that the indium was changed to aluminum.

### <Preparation of first ink>

The first ink was prepared by mixing each component such that the contents (% by mass) of the polymerizable compound, the photopolymerization initiator, the polymerization inhibitor, and the surfactant were set to the values shown in Tables 2 to 4.

### <Preparation of second ink>

### -Preparation of second ink M1-

The following components were mixed to prepare a second ink M1 with the following composition.
· Indium particle dispersion ... 6% by mass
· DPGDA ... 50.2% by mass
· PEGDA400 ... 9.3% by mass
· CTFA ... 20% by mass
· TFEA ... 2.5% by mass
· Omni.819 ... 4% by mass
· TPO ... 6% by mass
· UV22 ... 1.5% by mass
· MEHQ ... 0.5% by mass

### -Preparation of second ink M2-

The following components were mixed to prepare a second ink M2 with the following composition.
· Indium particle dispersion ... 6% by mass
· ISTA ... 30% by mass
· 3MPDDA ... 41% by mass
· TCDDMDA···11% by mass
· Omni.819 ... 4% by mass
· TPO ... 6% by mass
· UV22 ... 1.5% by mass
· MEHQ ... 0.5% by mass

### -Preparation of second ink M3-

A second ink M3 was prepared by the same method as that of the second ink M1, except that the indium particle dispersion in the second ink M1 was changed to an aluminum particle dispersion.

Details of each component contained in the first ink and the second ink are as follows.

### (Polymerizable compound A (polymerizable compound having amide structure))

· ACMO: acryloylmorpholine
· AO: 3-acryloyl-2-oxazolidinone
· NVP: N-vinylpyrrolidone
· NVC: N-vinylcaprolactam
· DMAA: N,N-dimethylacrylamide
· HEAA: hydroxyethyl acrylamide
· BMAA: N-butoxymethyl acrylamide
· EBAA: N, N'-ethylenebisacrylamide
· PAA: N-phenylacrylamide
· PrAA: N-propylacrylamide

(Polymerizable compound B (monofunctional polymerizable compound including at least one structure selected from group consisting of cyclic ether structure and alicyclic structure))
· CTFA: cyclic trimethylolpropane formal acrylate (product name "VISCOAT #200", manufactured by OSAKA ORGANIC CHEMICAL INDUSTRY LTD.)

### (Other polymerizable compounds)

· 4-HBA: 4-hydroxybutyl acrylate (product name "4-HBA", manufactured by OSAKA ORGANIC CHEMICAL INDUSTRY LTD.)
· NPGPODA: propylene oxide-modified neopentyl glycol diacrylate (product name "SR9003NS", manufactured by Sartomer Company, Inc.)
· DPGDA: dipropylene glycol diacrylate (product name "SR508", manufactured by Sartomer Company, Inc.)
· PEGDA400: polyethylene glycol (400) diacrylate (product name "SR344", manufactured by Sartomer Company, Inc.)
· TFEA: 2,2,2-trifluoroethyl acrylate (product name "VISCOAT 3F", manufactured by OSAKA ORGANIC CHEMICAL INDUSTRY LTD.)
· ISTA: isostearyl acrylate (product name "ISTA", manufactured by OSAKA ORGANIC CHEMICAL INDUSTRY LTD.)
· 3MPDDA: 3-methyl-1,5-pentanediol diacrylate (product name "SR341", manufactured by Sartomer)
· TCDDMDA: tricyclodecane dimethanol diacrylate (product name "SR833S", manufactured by Sartomer Company, Inc.)

### (Photopolymerization initiator)

· Omni.819: bis(2,4,6-trimethylbenzoyl)phenylphosphine oxide (product name "Omnirad 819", manufactured by IGM Resins B.V.)
· TPO: 2,4,6-trimethylbenzoyldiphenylphosphine oxide (product name "Speedcure TPO", manufactured by Lambson Ltd.)

### (Polymerization inhibitor)

· UV12: tris(N-nitroso-N-phenylhydroxylamine)aluminum salt (product name "FLORSTAB UV-12", manufactured by Kromachem Ltd.)
UV22: mixture of 2,6-bis(1,1-dimethylethyl)-4-(phenylmethylene)-2,5-cyclohexadien-1-one and propoxylated glycerin triacrylate (product name "IRGASTAB UV-22", manufactured by BASF)
· MEHQ: 4-methoxyphenol (manufactured by Tokyo Chemical Industry Co., Ltd.)

### (Surfactant)

· UV3500: polyether-modified polydimethylsiloxane having an acrylic group (product name "BYK-UV3500", manufactured by BYK)

### <Image recording method 1>

An inkjet jetting device (equipped with a Samba head manufactured by Fujifilm Dimatix Inc.) with a single-pass method was used to introduce a first ink into a first head and a second ink into a second head. As a substrate, VIEWFUL PET (thickness: 188 µm) was prepared. The first ink was applied onto the substrate in a form of a solid image with a resolution of 1200 dpi × 1200 dpi and a halftone dot rate of 100% to irradiate the first ink with curing exposure light as the active energy ray A, thereby forming the first ink film (first ink applying step and first ink film forming step).

Thereafter, the second ink was applied onto the first ink film, and the second ink was irradiated with the curing exposure light as the active energy ray B after 10 seconds, thereby obtaining an image recorded material (second ink applying step, image recording step).

The curing exposure light was an ultraviolet ray with a peak wavelength of 385 nm. The irradiation energy of the curing exposure light was set to 1000 mJ/cm².

In Comparative Example 1, the first ink was not used.

### <Image recording method 2>

A first ink was introduced into a white throttle of a multipass method (that is, a shuttle scan method) inkjet printer (product name "Acuity LED 1600R", manufactured by FUJIFILM Corporation), and a second ink was introduced into a clear throttle. As a substrate, VIEWFUL PET (thickness: 188 µm) was prepared.

The first ink was applied onto the substrate in a form of a solid image with a halftone dot rate of 100% (solid image form) and of a knocked-out character image pattern of 2, 4, 6, 8, and 10 points (first ink applying step).

The application of the ink was performed under the conditions of 1,200 dots per inch (dpi) × 1,200 dpi, 48 passes, and bidirectional printing.

The first ink applied onto the substrate was irradiated with curing exposure light as the active energy ray A by setting a lamp work of the inkjet printer, to form a first ink film (first ink film forming step).

The curing exposure light was an ultraviolet ray with a peak wavelength of 385 nm. The irradiation energy of the curing exposure light was set to 1000 mJ/cm².

The second ink was applied onto the first ink film in a form of a solid image with a halftone dot rate of 100% (solid image form) and of a knocked-out character image pattern of 2, 4, 6, 8, and 10 points (second ink applying step). In a case where the first ink was applied in the form of a solid image, the second ink was applied in the form of a solid image. In addition, in a case where the first ink was applied in the form of a knocked-out character image pattern, the second ink was applied in the same form of a knocked-out character image pattern.

The application of the ink was performed under the conditions of 1,200 dots per inch (dpi) × 1,200 dpi, 48 passes, and bidirectional printing.

By setting the lamp work of the inkjet printer, the second ink applied onto the first ink film was irradiated with the pinning exposure light (exposure light for temporary curing) as the active energy ray B 1 and the curing exposure light (exposure light for main curing) as the active energy ray B in this order, to obtain an image recorded material (image recording step).

A time from the landing of the second ink on the first ink film to the irradiation with the pinning exposure light was 0.1 seconds, and a time from the landing of the second ink on the first ink film to the irradiation with the curing exposure light was 2.0 seconds.

Here, the pinning exposure light was ultraviolet rays having a peak wavelength of 385 nm, and the curing exposure light was ultraviolet rays having a peak wavelength of 385 nm.

The irradiation energy of the pinning exposure light was 200 mJ/cm², and the irradiation energy of the curing exposure light was 1,000 mJ/cm².

In Comparative Example 1, the first ink was not used.

Using the obtained image recorded material, brightness, metallic lustrousness, and image quality were evaluated. The evaluation methods were as follows.

### (Brightness)

Using a fluorescence spectrophotometer (product name "FD-7", manufactured by Konica Minolta, Inc.), L* in the image recorded material produced by an image recording method 1 was measured. The lower the numerical value of L*, the more visually massive feeling of the image is obtained. The evaluation standard was as follows.
A: L* was less than 25.
B: L* was 25 or more and less than 30.
C: L* is 30 or more and less than 35.
D: L* is 35 or more.

### (Metallic lustrousness)

Using a gloss meter (product name "micro-gloss microtrigloss" manufactured by BYK-Gardner), a degree of 20° lustrousness of a solid image in the image recorded material produced by an image recording method 2 was measured. As the degree of 20° lustrousness was higher, the metallic lustrousness was more excellent. The evaluation standard was as follows.
AA: degree of 20° lustrousness was 600 or more.
A: degree of 20° lustrousness was 400 or more and less than 600.
B: degree of 20° lustrousness was 200 or more and less than 400.
C: degree of 20° lustrousness was 100 or more and less than 200.
D: degree of 20° lustrousness was less than 100.

### (Image quality)

The knocked-out character image of the image recorded material produced by the image recording method 2 was visually observed from a position 20 cm away from the image recorded material, and the image quality was evaluated based on whether or not the image was visually recognized. The evaluation standard was as follows.
A: knocked-out character image of 2 points or more can be visually recognized.
B: knocked-out character image of 4 points or more can be visually recognized.
C: knocked-out character image of 8 points or more can be visually recognized.
D: only knocked-out character image of 10 points can be visually recognized.

The evaluation results are shown in Tables 2 to 4. In Tables 2 to 4, "Polymerizable compound A" means a polymerizable compound having an amide structure. The "polymerizable compound B" means a monofunctional polymerizable compound including at least one structure selected from the group consisting of a cyclic ether structure and an alicyclic structure. The "other polymerizable compounds" mean a polymerizable compound which does not correspond to either the polymerizable compound A or the polymerizable compound B. The "number of functional groups" means the number of polymerizable groups included in the polymerizable compound. The "proportion of the polyfunctional polymerizable compound" means the proportion (% by mass) of the polyfunctional polymerizable compound that accounts for all polymerizable compounds. The "metal type" means the type of metal contained in the metal particles.

**[Table 2]**

| | | | Number of functional groups | Example 1 | Example 2 | Example 3 | Example 4 | Example 5 | Example 6 | Example 7 | Example 8 |
|---|---|---|---|---|---|---|---|---|---|---|---|
| First ink | Polymerizable compound A | DMAA | 1 | - | - | 20 | - | - | - | - | - |
| | | HEAA | 1 | - | - | - | 20 | - | - | - | - |
| | | BMAA | 1 | - | - | - | - | 20 | - | - | - |
| | | EBAA | 1 | - | - | - | - | - | 20 | - | - |
| | | PAA | 1 | - | - | - | - | - | - | 20 | - |
| | | PrAA | 1 | - | - | - | - | - | - | - | 20 |
| | Polymerizable compound B | CTFA | 1 | 71.5 | 71.5 | 61.5 | 61.5 | 61.5 | 61.5 | 61.5 | 61.5 |
| | Other polymerizable compounds | 4-HBA | 1 | 20 | 10 | - | - | - | - | - | - |
| | | NPGPODA | 2 | - | 10 | 10 | 10 | 10 | 10 | 10 | 10 |
| | Photopolymerization initiator | Omni819 | | 4 | 4 | 4 | 4 | 4 | 4 | 4 | 4 |
| | | TPO | | 4 | 4 | 4 | 4 | 4 | 4 | 4 | 4 |
| | Polymerization inhibitor | UV12 | | 0.5 | 0.5 | 0.5 | 0.5 | 0.5 | 0.5 | 0.5 | 0.5 |
| | Proportion of polyfunctional polymerizable compound (% by mass) | | | 0 | 11 | 11 | 11 | 11 | 11 | 11 | 11 |
| | Surface tension (mN/m) | | | 37 | 36 | 36 | 35 | 35 | 35 | 35 | 35 |
| Second ink | Type | | | M1 | M1 | M1 | M1 | M1 | M1 | M1 | M1 |
| | Metal type | | | In | In | In | In | In | In | In | In |
| Evaluation | Brightness | | | C | C | B | B | B | B | B | B |
| | Metallic lustrousness | | | B | A | A | A | A | A | A | A |
| | Image quality | | | A | A | A | A | A | A | A | A |

**[Table 3]**

| | | | Number of functional groups | Example 9 | Example 10 | Example 11 | Example 12 | Example 13 | Example 14 | Example 15 |
|---|---|---|---|---|---|---|---|---|---|---|
| First ink | Polymerizable compound A | ACMO | 1 | 20 | - | - | - | - | - | - |
| | | AO | 1 | - | 20 | - | - | - | - | - |
| | | NVP | 1 | - | - | 20 | - | - | - | - |
| | | NVC | 1 | - | - | - | 20 | 20 | 20 | 20 |
| | Polymerizable compound B | CTFA | 1 | 61.5 | 61.5 | 61.5 | 71.5 | 66.5 | 61.5 | 31.5 |
| | | NPGPODA | 2 | 10 | 10 | 10 | - | 5 | 10 | 40 |
| | Photopolymerization initiator | Onini.819 | | 4 | 4 | 4 | 4 | 4 | 4 | 4 |
| | | TPO | | 4 | 4 | 4 | 4 | 4 | 4 | 4 |
| | Polymerization inhibitor | UV12 | | 0.5 | 0.5 | 0.5 | 0.5 | 0.5 | 0.5 | 0.5 |
| | Proportion of polyfunctional polymerizable compound (% by mass) | | | 11 | 11 | 11 | 0 | 5 | 11 | 44 |
| | Surface tension (mN/m) | | | 36 | 35 | 35 | 35 | 35 | 35 | 34 |
| Second ink | Type | | | M1 | M1 | M1 | M1 | M1 | M1 | M1 |
| | Metal type | | | In | In | In | In | In | In | In |
| Evaluation | Brightness | | | A | A | A | A | A | A | B |
| | Metallic lustrousness | | | AA | AA | AA | B | A | AA | A |
| | Image quality | | | A | A | A | A | A | A | A |

**[Table 4]**

| | | | Number of functional groups | Example 16 | Example 17 | Example 18 | Example 19 | Comparative Example 1 | Comparative Example 2 | Comparative Example 3 |
|---|---|---|---|---|---|---|---|---|---|---|
| First ink | Polymerizable compound A | NVC | 1 | 5 | 10 | 15 | 20 | | - | 5 |
| | Polymerizable compound B | CTFA | 1 | 76.5 | 71.5 | 66.5 | 61.5 | | 71.3 | 76.5 |
| | Other polymerizable compounds | 4-HBA | 1 | - | - | - | - | | 20 | - |
| | | NPGPODA | 2 | 10 | 10 | 10 | 10 | | - | 10 |
| | Photopolymerization initiator | Onini.819 | | 4 | 4 | 4 | 4 | | 4 | 4 |
| | | TPO | | 4 | 4 | 4 | 4 | | 4 | 4 |
| | Polymerization inhibitor | UV12 | | 0.5 | 0.5 | 0.5 | 0.5 | | 0.5 | 0.5 |
| | Surfactant | UV-3500 | | - | - | - | - | | 0.2 | - |
| | Proportion of polyfunctional polymerizable compound (% by mass) | | | 11 | 11 | 11 | 11 | | 0 | 11 |
| | Surface tension (mN/m) | | | 33 | 34 | 35 | 35 | | 28 | 33 |
| Second ink | Type | | | M1 | M1 | M1 | M2 | M1 | M1 | M3 |
| | Metal type | | | In | In | In | In | In | In | Al |
| Evaluation | Brightness | | | C | A | A | B | D | D | D |
| | Metallic lustrousness | | | A | AA | AA | B | A | D | C |
| | Image quality | | | A | A | A | A | D | A | A |

As shown in Tables 2 to 4, the ink sets of Examples 1 to 19 comprise a first ink containing a polymerizable compound and a second ink containing metal particles that contain indium, and a polymerizable compound, and since the surface tension of the first ink is 30 mN/m or more, in a case where high-speed printing is performed, it was possible to record an image with excellent metallic lustrousness and a visually massive feeling.

In Comparative Example 1, since the first ink was not used, the brightness of the image surface was high, and an image with a visually massive feeling was not obtained. It is considered that this is because the metal particles were unevenly distributed at the gas-liquid interface at a slow speed after the second ink was applied.

In Comparative Example 2, since the surface tension of the first ink was less than 30 mN/m, the brightness of the image surface was high, and an image with a visually massive feeling was not obtained. In addition, the metallic lustrousness of the image was not obtained. It is considered that this is because the metal particles were not unevenly distributed at the gas-liquid interface after the second ink was applied.

In Comparative Example 3, since the metal particles contained in the second ink did not contain indium, the brightness of the image surface was high, and an image with a visually massive feeling was not obtained. In addition, the metallic lustrousness of the image was not obtained.

The entire disclosure of Japanese Patent Application No. 2022-087675, filed May 30, 2022, is incorporated into the present specification by reference. In addition, all documents, patent applications, and technical standards described in the specification are incorporated herein by references to the same extent as the incorporation of the individual documents, patent applications, and technical standards by references are described specifically and individually.

## Claims

1. An ink set, comprising:
a first ink that is an active energy ray curable inkjet ink containing a polymerizable compound; and
a second ink that is an active energy ray curable inkjet ink containing metal particles that contain indium, and a polymerizable compound,
wherein a surface tension of the first ink is 30 mN/m or more.

2. The ink set according to claim 1, wherein the polymerizable compound contained in the first ink includes a polymerizable compound having an amide structure.

3. The ink set according to claim 2, wherein a content of the polymerizable compound having the amide structure is from 5% by mass to 50% by mass with respect to a total amount of the first ink.

4. The ink set according to claim 1, wherein the polymerizable compound contained in the first ink includes a polyfunctional polymerizable compound.

5. The ink set according to claim 4, wherein a proportion of the polyfunctional polymerizable compound in the polymerizable compound is from 1% by mass to 50% by mass.

6. The ink set according to claim 1, wherein the polymerizable compound contained in the first ink includes a monofunctional polymerizable compound including at least one structure selected from the group consisting of a cyclic ether structure and an alicyclic structure.

7. The ink set according to claim 1, wherein the polymerizable compound contained in the first ink includes a polymerizable compound having an amide structure and a monofunctional polymerizable compound including at least one structure selected from the group consisting of a cyclic ether structure and an alicyclic structure.

8. An image recording method in which the ink set according to any one of claims 1 to 7 is used, the method comprising:
a step of applying the first ink onto a substrate using an inkjet recording method;
a step of forming a first ink film by irradiating the first ink applied onto the substrate with an active energy ray A;
a step of applying the second ink onto the first ink film using an inkjet recording method; and
a step of recording an image by irradiating the second ink applied onto the first ink film with an active energy ray B.

9. The image recording method according to claim 8, wherein the step of recording the image includes:
a step of temporarily curing the second ink by irradiation with an active energy ray B 1 having a lower irradiation energy than the active energy ray B, and
a step of irradiating an ink film formed by the temporary curing of the second ink with the active energy ray B.

10. An image recorded material, comprising:
a substrate; and
an image disposed on the substrate,
wherein the image includes a first ink layer formed on a surface of the substrate and a second ink layer formed on a surface of the first ink layer, and
metal particles containing indium are present only in a region extending up to 70% of a thickness of the second ink layer from a surface of the second ink layer toward an inside of the second ink layer.
